(19) **Europäisches Patentamt European Patent Office Office européen des brevets**

(11) **EP 1 814 190 B1**

(12) **EUROPEAN PATENT SPECIFICATION**

(45) Date of publication and mention
of the grant of the patent:
**09.06.2010 Bulletin 2010/23**

(51) Int Cl.:
*H01Q 1/22* *(2006.01)*

(21) Application number: **06008706.1**

(22) Date of filing: **26.04.2006**

(54) **Folded dipole antenna and tag using the same**

Gefaltete Dipolantenne und Etikett zur RFID-Verwendung damit

Antenne doublet repliée et étiquette l'utilisant

(84) Designated Contracting States:
**DE FR GB**

(30) Priority: **31.01.2006 JP 2006023646**

(43) Date of publication of application:
**01.08.2007 Bulletin 2007/31**

(73) Proprietor: **Fujitsu Ltd.**
**Kawasaki-shi, Kanagawa 211-8588 (JP)**

(72) Inventors:
• **Manabu, Kai, c/o Fujitsu Limited**
**Kawasaki-shi, Kanagawa 211-8588 (JP)**
• **Toru, Maniwa, c/o Fujitsu Limited**
**Kawasaki-shi, Kanagawa 211-8588 (JP)**
• **Takashi, Yamagajo, c/o Fujitsu Limited**
**Kawasaki-shi, Kanagawa 211-8588 (JP)**

(74) Representative: **Sunderland, James Harry**
**Haseltine Lake LLP**
**Lincoln House**
**300 High Holborn**
**London**
**WC1V 7JH (GB)**

(56) References cited:
**WO-A-98/40930      US-A1- 2005 092 845**

**Description**

Background of the Invention

Field of the Invention

The present invention relates to a folded dipole antenna and a tag using the same, and in particular to a noncontact folded dipole antenna for a signal transmission/reception to/from an RFID reader/writer, and an RFID tag using the same.

Description of the Related Art

An RFID system has been already known in which a reader/writer transmits a signal of approximately 1 W via a radio line of a UHF bandwidth (860-960 MHz), and a tag receives the signal and returns a response signal to the reader/writer, thereby enabling information within the tag to be read by the reader/writer. It is stipulated that the communication frequency is 953 MHz, whereby the communication distance is approximately 3 m, while it depends on the gain of an antenna provided on the tag and the operation voltage and a peripheral environment of a chip. The tag is composed of an antenna approximately 0.1 mm thick and an LSI chip (whose size is approximately 1 mm square and 0.2 mm thick) connected to an antenna feeding portion.

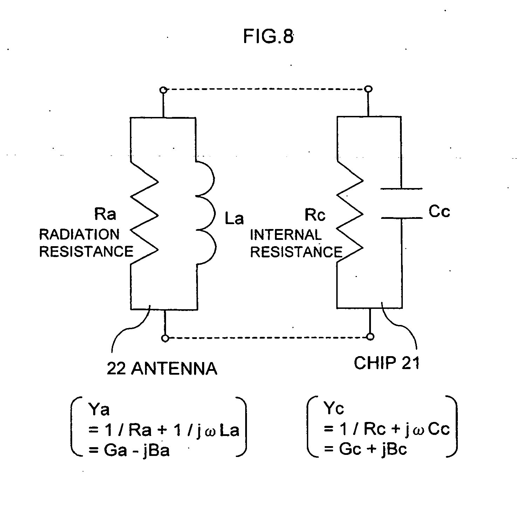

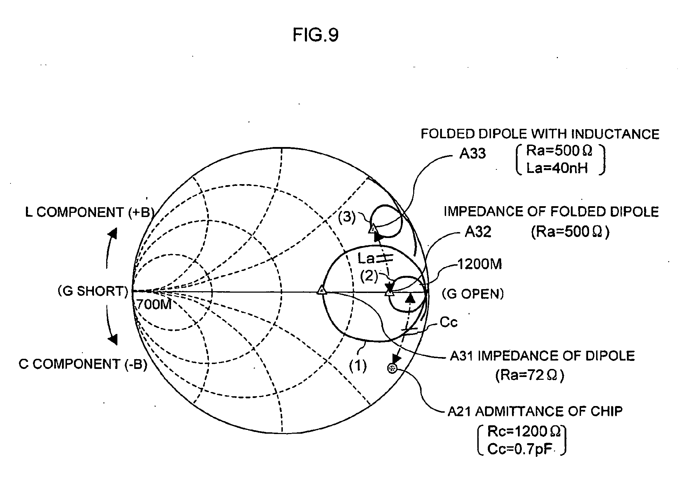

As shown in Fig.8, an LSI chip 21 can be equivalently represented by a parallel circuit of an internal resistance Rc (e.g. 1200 $\Omega$) and a capacitance Cc (e.g. 0.7 pF). An admittance Yc (=1/Rc + jwCc) of the chip 21 is indicated at a position A21 on an admittance chart of Fig.9. On the other hand, an antenna 22 can be equivalently represented by a parallel circuit of a radiation resistance Ra (e.g. 500 $\Omega$) and an inductance La (e.g. 40 nH).

By connecting the chip 21 to the antenna 22 in parallel, the capacitance Cc and the inductance La resonate with each other and make impedance matching at a desired resonant frequency fo (the above-mentioned 953 MHz), so that the maximum reception power at the antenna 22 is supplied to the chip 21, as seen from the following equation.

$$fo \ = \ \frac{1}{2 \ \pi \ \sqrt{L C}} \qquad \cdots Eq.(1)$$

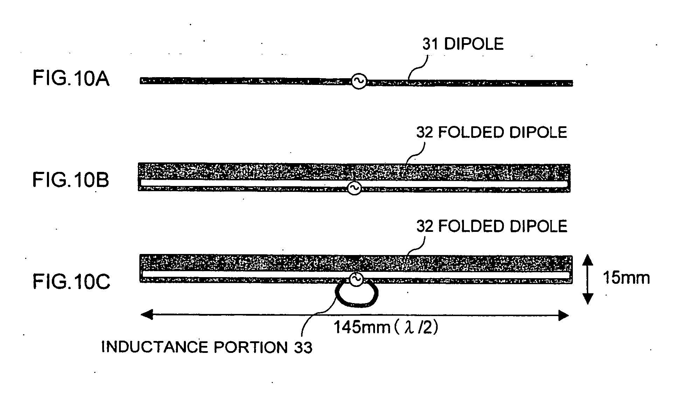

As a basic antenna used for an RFID tag, a dipole antenna 31 approximately 145 mm ($\lambda$/2) long shown in Fig. 10A can be mentioned. The impedance in this case plots a track (1) in Fig.9. At fo=953 MHz, Ra assumes 72 $\Omega$ and the imaginary part assumes 0, which are indicated at a position A31 on the track (1).

Since the radiation resistance Ra required for the antenna of the RFID tag is as extremely high as approximately 500-2000 $\Omega$, the radiation resistance Ra is required to be raised from 72 $\Omega$.

It is well known that with a folded dipole antenna 32 approximately 145 mm long as shown in Fig.10B the radiation resistance Ra is raised from 72 $\Omega$ of the dipole antenna to approximately 300 $\Omega$-500 $\Omega$, depending on a line width (see e.g. non-patent document 1).

Fig.9 shows that the impedance of the folded dipole antenna 32 plots a track (2), and at fo=953 MHz, Ra assumes 500 $\Omega$ and the imaginary part assumes 0, which are indicated at a position A32 on the track (2).

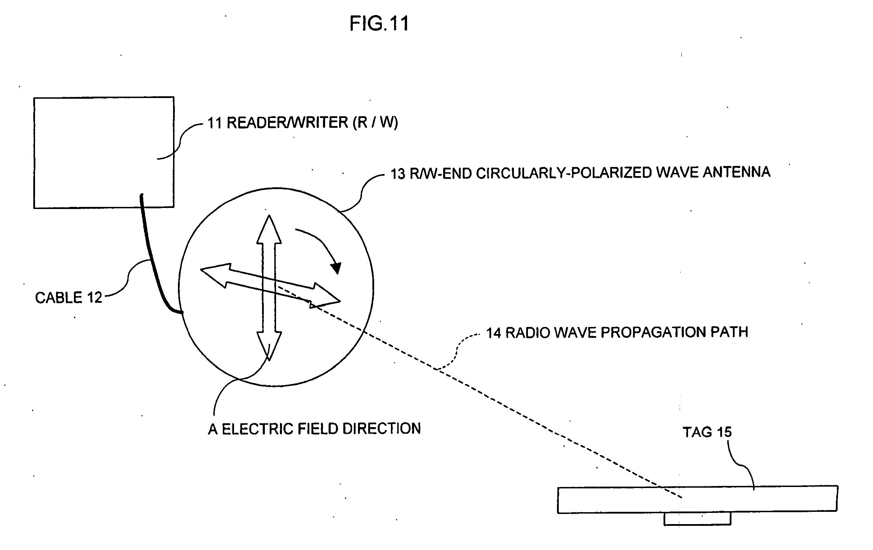

Furthermore, by connecting an inductance portion 33 in parallel to the folded dipole antenna 32 shown in Fig. 10B as shown in Fig.10C, the track (2) on the admittance chart of Fig. 11 is rotated counterclockwise, so that the impedance can be indicated at a position A33 on the track (3) with an imaginary component (Ba=-1/$\omega$La) of the same absolute value as the imaginary component (Bc= $\omega$Cc) of the admittance of the chip 21. In this case, the shorter the length of the inductance portion 33 becomes, the smaller the value of the inductance La becomes, which leads to a large imaginary component and a large rotation amount.

Since the imaginary component Bc of the chip 21 has the same magnitude as that of the imaginary component Ba of the antenna 22, they are cancelled mutually and the resonance occurs at the frequency fo. The canceling of the imaginary components is the most important element upon designing an RFID tag. Although matching between the internal resistance Rc of the chip 21 and the radiation resistance Ra of the antenna 22 is the most preferable, it is not necessary to strictly match them with each other.

On the other hand, there is a radio tag operating in two frequency bands by arranging a non-feeding element of a half wavelength resonating in 2.4 GHz band formed by a conductive pattern on the opposite side of a folded dipole antenna across a dielectric sheet at the folded dipole antenna resonating in 900 MHz band formed by the conductive pattern on the dielectric sheet, and by performing impedance matching for two frequency bands (see e.g. patent document 1).

[Non-patent document 1] Antenna engineering handbook: Page 112 (published on March 5, 1999 by Ohmsha)

[Patent document 1] Japanese Patent Application Laid-open No. 2005-236468

Fig.11 shows an arrangement of the above-mentioned RFID system. An R/W-end antenna 13 connected to a reader/writer (R/W) 11 through a cable 12 is a patch antenna or the like having a circularly-polarized wave characteristic. Since an electric field direction "A" from the reader/writer 11 is always rotated as shown in Fig.11, a tag 15 with an antenna which is generally a linearly-polarized wave can transmit/receive a signal to/from the reader/writer 11 through a radio wave propagation path 14, whichever direction the tag 15 faces.

When the folded dipole antenna shown in Fig.10B is used for the tag 15, the folded dipole antenna also has a linearly-polarized wave characteristic. Therefore, if an appropriate electric field can be generated in a surface orthogonal to a linearly-polarized wave surface specific to the folded dipole antenna, a polarized wave orthogonal to the electric field direction from the reader/writer 11 at a certain point can be received, and the communication distance of the tag 15 can be extended.

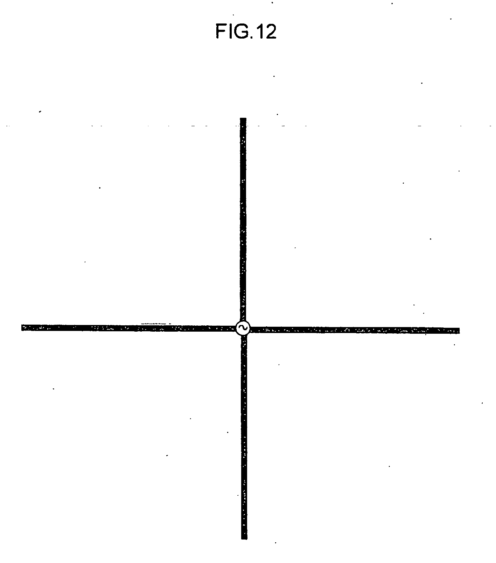

Although there has been known a cross dipole as shown in Fig.12, it makes the tag too huge for the practical use.

In document WO 98/40930, Radio frequency identification tags and other ultra-miniature circuits are disclosed. These RFID comprise dipoles with reactive components therebetween.


Summary of the Invention

It is accordingly an object of the present invention to provide a folded dipole antenna which can extend a communication distance even if a reader/writer has a circularly-polarized wave characteristic, and a tag using the folded dipole antenna.

In order to achieve the above-mentioned object, a folded dipole antenna according to the present invention is defined in claim 1.

Namely, in the present invention, the first and the second dipole portion are mutually connected so as to form a slot portion. Supposing that a chip is mounted on a feeding portion of the first dipole portion in this state, the first and the second dipole portion form a high-frequency circuit (one of the antenna terminals-second dipole portion-the other antenna terminal) through the slot portion. Therefore, the feeding portion is generated or provided through the slot portion between the first and the second dipole portion, whereby the dipole portions and the slot portion operate as a slot antenna, and a longitudinal linearly-polarized wave orthogonal to the direction of the linearly-polarized wave surface by the first dipole portion is generated.

Thus, a lateral linearly-polarized wave (dipole mode) by the first dipole portion and the longitudinal linearly-polarized wave orthogonal thereto (slot mode) concurrently operate, thereby enabling an appropriate dual mode-polarized wave characteristic (substantially circularly-polarized wave characteristic or elliptically-polarized wave characteristic) to be provided, and increasing a matching degree with the circularly-polarized wave of the reader/writer.

Also, an inductance portion for impedance matching with the chip may be connected to the first dipole portion, in parallel with the above-mentioned feeding portion.

By providing an inductance portion in this way, costs and labor hour can be reduced in comparison with a case where a chip inductance commercially available is used.

Also, a tag is realized by connecting input/output terminals of the chip to antenna terminals of the above-mentioned feeding portion.

By actually connecting input/output terminals of the chip to antenna terminals of the feeding portion, a tag on which a chip is actually mounted is realized.

Accordingly, the linearly-polarized wave in the dipole mode is generated in the first dipole portion, so that the formation of a high-frequency circuit equivalently makes even the slot portion substantially mounting thereon the feeding portion. Therefore, the longitudinal linearly-polarized wave in the slot mode is generated between the first and the second dipole portion, and a degree of matching with the circularly-polarized wave of the reader/writer is increased.

In the above-mentioned case, the input/output terminals of the chip are connected to an antenna terminal of the first dipole portion. Also However, a second terminal such as a monitor terminal is provided for such a chip, in which by directly connecting the second terminal to the second dipole portion as well, an internal capacitance of the chip itself intervenes between the second terminal and one of the antenna terminals, which leads to the same electric potential on a high frequency basis. Thus, the high-frequency circuit (one of the antenna terminals - second terminal - second dipole portion - the other antenna terminal) is formed between the first and the second dipole portion in the same way as the above, so that the linearly-polarized wave in the slot mode is generated through the slot portion.

Furthermore, a land pattern may be provided in the above-mentioned slot portion and another terminal of the above-mentioned chip may be connected to the land pattern.

Namely, not by connecting the above-mentioned second terminal of the chip to the second dipole portion, but by connecting it to a land pattern provided in the slot portion, the land pattern and one of the antenna terminals of the first dipole portion are coupled on a high frequency basis by the internal capacitance to assume the same electric potential. Furthermore, the high-frequency coupling occurs between the land pattern and the second dipole portion by the capacitance. Therefore, the high-frequency circuit of one of the antenna terminals - land pattern-second dipole portion - the other antenna terminal is formed, the substantial feeding portion is generated between the first dipole portion and the second dipole portion, thereby enabling the linearly-polarized wave in the slot mode in addition to the linearly-polarized wave in the dipole mode to be generated in the same way as the above.

The above-mentioned first and the second dipole portion may comprise conductors consisting of Cu, Ag, or Al, and may be fixed on a sheet consisting of PET, film, or paper.

As mentioned above, according to the present invention, not only a linearly-polarized wave in a dipole mode at a certain point from a reader/writer but also a linearly-polarized wave orthogonal thereto in a slot mode in the dipole mode can be transmitted/received. Therefore, it is possible to improve a matching degree with a circularly-polarized wave from the reader/writer, thereby enhancing a communication distance.

Brief Description of the Drawings

The above and other objects and advantages of the invention will be apparent upon consideration of the following detailed description, taken in conjunction with the accompanying drawings, in which the reference numerals refer to like parts throughout and in which:

Fig.1 is a plane view showing an example of a folded dipole antenna cited to understand the present invention;
Fig.2 is a plane view showing in closeup a vicinity of a chip mounting part of an example [1] of a tag according to fig. 1;
Fig.3 is a diagram illustrating an operation of a tag according to the present invention;
Fig.4 is a graph showing a relationship between a width of a dipole portion used in the present invention and a communication distance ratio;
Fig.5 is a graph showing a relationship between a length of an inductance portion used in the present invention and an inductance;
Fig.6 is a plane view showing in closeup a vicinity of a chip mounting part of an embodiment [1] of a tag according to the present invention;
Fig.7 is a plane view showing in closeup a vicinity of a chip mounting part of an embodiment [2] of a tag according to the present invention;
Fig.8 is a diagram showing a general equivalent circuit of an RFID tag;
Fig.9 is an admittance chart (700 MHz-1200 MHz: fo=953 MHz) using various antennas according to an RFID tag;
Figs.10A-10C are diagrams showing an antenna example for an RFID tag;
Fig.11 is a diagram of a generally-known RFID system; and
Fig.12 is a diagram showing a generally-known cross dipole.

Description of the Embodiments

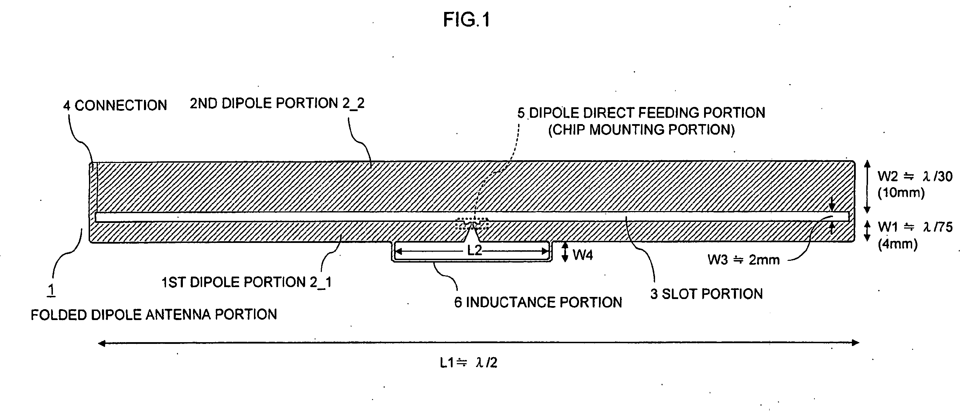

Example of folded dipole antenna: Fig.1

Fig.1 shows an example of folded dipole antenna 1. In this embodiment, both ends of a first dipole portion 2_1 and a second dipole portion 2_2 are mutually connected with a connection 4 so as to form a slot portion 3. At an intermediate point of the first dipole portion 2_1, a feeding portion 5 where an RFID chip can be mounted is provided, and an inductance portion 6 is connected to the first dipole portion 2_1 in parallel with the feeding portion 5.

In this folded dipole antenna 1, a width W1 of the first dipole portion 2_1 assumes approximately $\lambda/75=4$ mm, a width W2 of the second dipole portion (folded portion) 2_2 assumes approximately $\lambda/30=10$ mm, and a width W3 of the slot portion 3 assumes approximately 2 mm. Furthermore, an overall length L1 assumes $\lambda/2=144$ mm, and a length L2 of the inductance portion 6 is set to a length (lateral length L2=approximately 30 mm, longitudinal length W4 = approximately 4 mm) by which resonance may occur with La = 40 nH when a chip capacitance Cc mounted on the feeding portion 5 assumes 0.7 pF.

It is to be noted that the above-mentioned dimension example of the folded dipole antenna 1 will be described in detail later.

Example [1] of tag

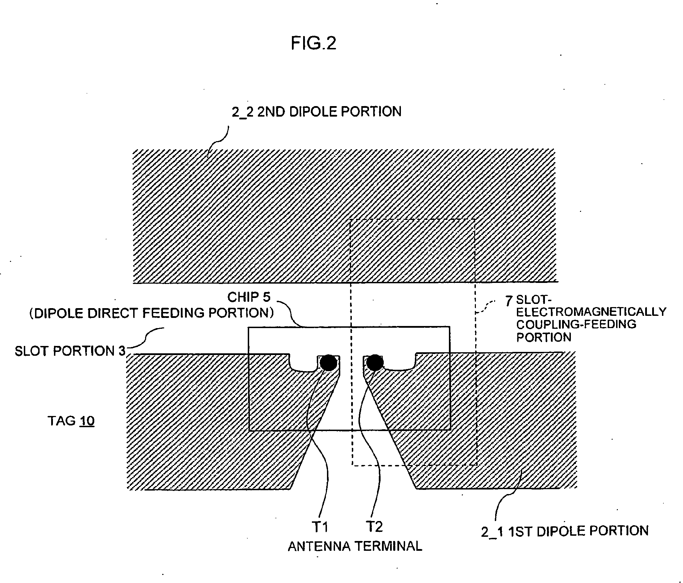

Fig.2 shows an example of a tag 10 realized by actually mounting a chip in the folded dipole antenna 1 shown in Fig.1. The diagram of this example shows in closeup a vicinity of the feeding portion 5 in Fig.1, where a chip is mounted on a position of the feeding portion 5, which is also referred to as chip 5, and input/output terminals (not shown) of the chip are connected to antenna terminals T1 and T2 of the first dipole portion 2_1.

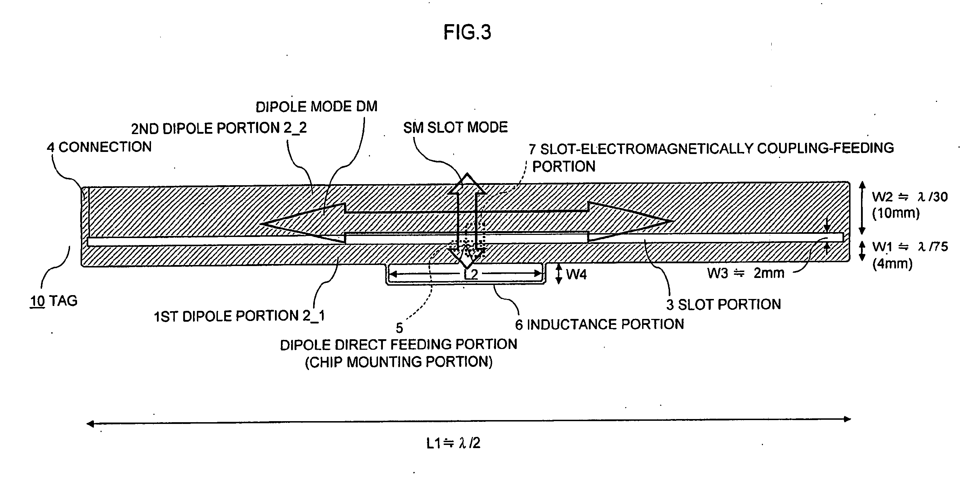

If the chip 5 is actually mounted on the feeding potion 5 that is a chip mounting portion, a linearly-polarized wave in a dipole mode DM by a direct feeding as shown in Fig.3, i.e. a linearly-polarized wave in a lateral direction on the drawing sheet is generated in the first dipole portion 2_1 subject to a direct feeding.

Since the first dipole portion 2_1 and the second dipole portion 2_2 are set wider than a general folded dipole antenna, the first dipole portion 2_1 and the second dipole portion 2_2 form a circuit consisting of the antenna terminal T2-second dipole portion 2_2-capacitance between both dipole portions - antenna terminal T1 in a high-frequency (e.g. 953 MHz) through the slot portion 3 shown by a dotted line in Fig.2, so that a feeding portion 7 is generated between the antenna terminal T2 and the second dipole portion 2_2. Thus, the feeding portion 7 is provided across the slot portion 3, thereby generating a linearly-polarized wave in a slot mode SM (longitudinal direction on the drawing sheet) as shown in Fig.3.

The radiation resistance of the slot portion 3 at this time is approximately 1000-3000 $\Omega$ by simulation, which matches with a general impedance (e.g. 1200 $\Omega$) of the chip 5 mounted.

Thus, the lateral linearly-polarized wave in the dipole mode DM mainly serves and the longitudinal linearly-polarized wave in the slot mode SM supplementally serves, so that an appropriate dual mode-polarized wave characteristic is provided by the tag 10 as a whole. It becomes possible to transmit/receive not only the dipole linearly-polarized wave from the reader/writer at a certain point but also the linearly-polarized wave orthogonal thereto in the slot mode, so that a communication distance can be increased.

Now, the reasons why the dimensions of the folded dipole antenna 1 are adopted as shown in Fig. 1 will be described.

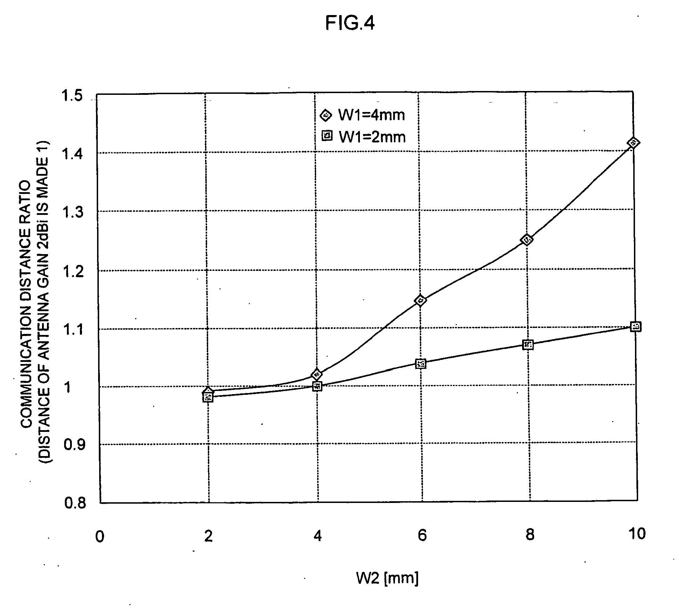

Fig.4 shows a graph of a relationship between the width W2 of the second dipole portion 2_2 and the communication distance ratio, obtained by an electromagnetic field simulator commercially available, with the width W1 of the first dipole portion 2_1 as a parameter. As seen from this graph, the communication distance ratio increases in approximate proportion to the width W2 of the second dipole portion 2_2, and the communication distance ratio in a case where the width W1 of the first dipole portion 2_1 is 4 mm is increased more than a case where the width W2 is 2 mm. This graph indicates that when the width W1 of the first dipole portion is 4 mm and the width W2 of the second dipole portion is 10 mm, the communication distance approximately 1.4 times as long as that of the general folded dipole antenna generating only the linearly-polarized wave can be obtained.

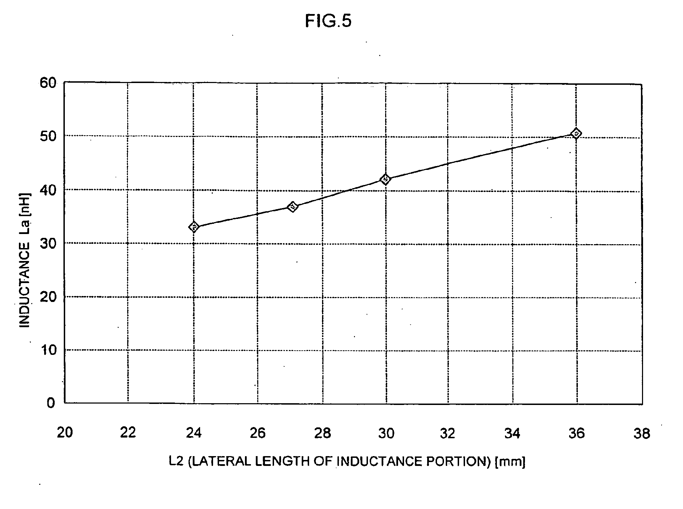

Fig.5 also shows a graph of a relationship between the lateral length L2 of the inductance portion 6 and the generated inductance La [nH] obtained by the electromagnetic field simulator commercially available, with the capacitance Cc of the chip=0.7 pF as mentioned above. In order to obtain the inductance La=40 nH for the resonance with the capacitance, it is seen that the lateral length L2 of the inductance portion 6 is approximately 30 mm as mentioned above. The radiation resistance is 1200 $\Omega$ at this time.

Although it is possible to use a chip inductance commercially available instead of a loop-like inductance, the chip inductance requires much cost and labor hour. Therefore, the inductance portion is generally formed by using such a loop-like pattern. Also, by using a part of the first dipole portion as an inductance, the whole antenna can be downsized.

Thus, the dimensions of the folded dipole antenna 1 shown in Fig.1 are determined.

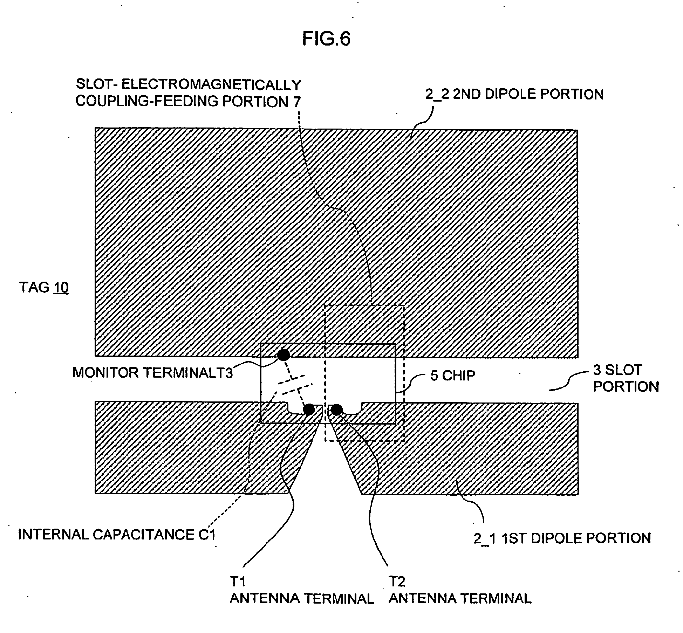

<u>Embodiment [1] of tag: Fig.6</u>

While the chip 5 is directly connected to the antenna terminals T1 and T2 of the first dipole portion 2_1 in the above-mentioned embodiment [1], the chip 5 is also directly connected to the second dipole portion 2_2 as shown in Fig.6 in the embodiment [1].

Namely, not only the input/output terminals for the connection to the antenna terminals T1 and T2 but also another (second) terminal such as a monitor terminal T3 as the third terminal is provided in the chip 5 in some cases. In such cases, the monitor terminal T3 is directly connected to the second dipole portion 2_2.

Since the antenna terminal T1 and the monitor terminal T3 assume the same potential on a high frequency basis through a capacitance C1 inherently existing within the chip 5, a high-frequency circuit of the antenna terminal T1-capacitance C1- second dipole portion 2_2 - antenna terminal T2 is formed, so that the feeding portion 7 is provided through the slot portion 3 between the terminal T2 of the first dipole portion 2_1 and the second dipole portion 2_2 in the same way as the above-mentioned example [1]. Namely, in the case of the embodiment [1], it is made easier to provide the high-frequency circuit (feeding portion) by using the internal capacitance C1 than the case of the example [1].

Thus, also in the embodiment [1], the linearly-polarized wave in the dipole mode DM and the linearly-polarized wave in the slot mode SM as shown in Fig.3 are generated, thereby enabling a signal transmission/reception to/from the reader/writer to be more effectively performed and the communication distance to be increased.

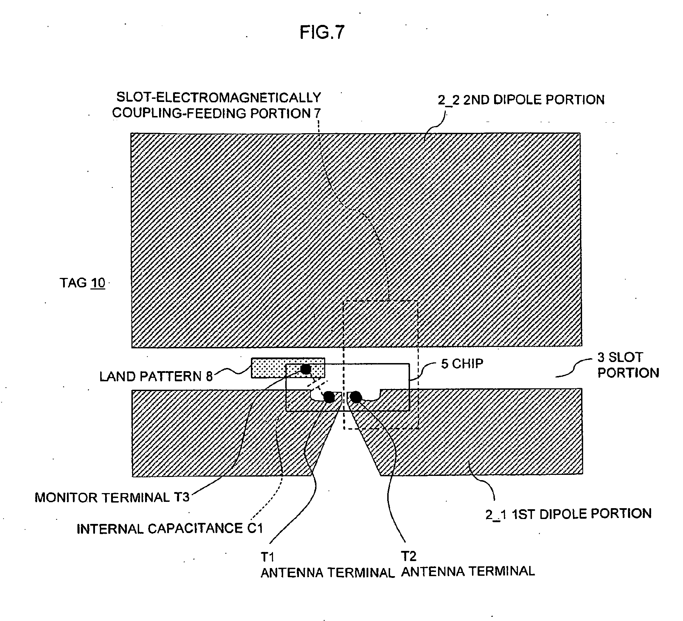

Embodiment [2] of tag: Fig.7

The embodiment [2] is provided with an arrangement intermediate between the above-mentioned example [1] and embodiment [1].

Namely, as shown in Fig.7, a land pattern 8 is provided in the slot portion 3, and the land pattern 8 and the monitor terminal T3 of the chip 5 are mutually connected. Thus, the monitor terminal T3 of the land pattern 8 and the antenna terminal T1 are made the same potential on a high frequency basis by the internal capacitance C1. Since the capacitance exists on a high frequency basis between the land pattern 8 and the second dipole portion 2_2, a high-frequency circuit consisting of the antenna terminal T1-internal capacitance C1- monitor terminal T3-second dipole portion 2_2-antenna terminal T2 is formed, thereby providing the feeding portion 7 as indicated by a dotted line between the antenna terminal T2 and the second dipole portion 2_2.

Accordingly, also in this embodiment, the linearly-polarized wave in the dipole mode DM and the linearly-polarized wave in the slot mode SM as shown in Fig.3 are generated in the same way as the above-mentioned example [1] and embodiment [1], thereby enabling a signal transmission/reception to/from the reader/writer to be more effectively performed.

It is to be noted that the present invention is not limited to the above-mentioned embodiments and it is obvious that various modifications may be made by one skilled in the art based on the recitation of the claims.

## Claims

1. A folded dipole antenna comprising:

   a first dipole portion with a feeding portion; and
   a second dipole portion having ends connected to both ends of the first dipole portionto form a slot portion;
   the first and the second dipole portion having a width for generating a linearly-polarized wave in a longitudinal direction, when a chip is mounted on the feeding portion, wherein input and output terminals of the chip are connected to antenna terminals of the feeding portion, **characterized in that** another terminal of the chip is connected to the second dipole portion.

2. The folded dipole antenna as claimed in claim 1, wherein an inductance portion for impedance matching with the chip is connected to the first dipole portion, in parallel with the feeding portion.

3. The folded dipole antenna as claimed in claim 1 or 2, wherein the first and the second dipole portion comprise conductors consisting of Cu, Ag, or Al, and are fixed on a sheet consisting of PET, film, or paper.

4. The tag as claimed in claim 1, wherein a land pattern is provided in the slot portion and another terminal of the chip is connected to the land pattern.

5. The tag as claimed in claim 1, wherein the first and the second dipole portion comprise conductors consisting of Cu, Ag, or Al, and are fixed on a sheet consisting of PET, film, or paper.

## Patentansprüche

1. Faltdipolantenne umfassend:

   einen ersten Dipolabschnitt mit einem Zuführungsabschnitt; und
   einen zweiten Dipolabschnitt mit Enden, die mit beiden Enden des ersten Dipolabschnittes verbunden sind, um einen Spaltabschnitt zu bilden;
   wobei der erste und der zweite Dipolabschnitt eine Breite zum Erzeugen einer linear polarisierten Welle in einer Längsrichtung haben, wenn ein Chip auf den Zuführungsabschnitt montiert ist,
   bei dem Eingangs- und Ausgangsanschlüsse des Chips mit Antennenanschlüssen des Zuführungsabschnittes verbunden sind,
   **dadurch gekennzeichnet, dass** ein anderer Anschluss des Chips mit dem zweiten Dipolabschnitt verbunden ist.

2. Faltdipolantenne nach Anspruch 1, bei der ein Induktivitätsabschnitt zur Impedanzanpassung mit dem Chip mit dem ersten Dipolabschnitt parallel zu dem Zuführungsabschnitt verbunden ist.

3. Faltdipolantenne nach Anspruch 1 oder 2, bei der der erste und der zweite Dipolabschnitt aus Cu, Ag oder Al gebildete Leiter umfassen und auf einem Blatt bestehend aus PET, Film oder Papier fixiert sind.

4. Etikett nach Anspruch 1, bei dem ein Stegmuster in dem Spaltabschnitt vorgesehen ist und ein anderer Anschluss des Chips mit dem Stegmuster verbunden ist.

5. Etikett nach Anspruch 1, bei dem der erste und der zweite Dipolabschnitt aus Cu, Ag oder Al gebildete Leiter umfassen und auf einem Blatt bestehend aus PET, Film oder Papier fixiert sind.


**Revendications**

1. Antenne dipôle repliée comprenant :

une première partie dipôle pourvue d'une partie alimentation ; et
une seconde partie dipôle comportant des extrémités reliées aux deux extrémités de la première partie dipôle afin de former une partie fente ;
les première et seconde parties dipôles ayant une largeur pour générer une onde à polarisation linéaire dans une direction longitudinale, lorsqu'une puce est montée sur la partie alimentation,
dans laquelle les bornes entrée et sortie de la puce sont reliées aux bornes d'antenne de la partie alimentation, **caractérisée en ce qu'**une autre borne de la puce est reliée à la seconde partie dipôle.

2. Antenne dipôle repliée selon la revendication 1, dans laquelle une partie inductance pour correspondance d'impédance avec la puce est reliée à la première partie dipôle, parallèlement à la partie alimentation.

3. Antenne dipôle repliée selon la revendication 1 ou 2, dans laquelle les première et seconde parties dipôles comprennent des conducteurs constitués de Cu, d'Ag ou d'Al, et sont fixées sur une feuille constituée de PET, de film ou de papier.

4. Etiquette selon la revendication 1, dans laquelle un motif plage d'accueil est disposé dans la partie fente et une autre borne de la puce est reliée au motif plage d'accueil.

5. Etiquette selon la revendication 1, dans laquelle les première et seconde parties dipôles comprennent des conducteurs constitués de Cu, d'Ag ou d'Al, et sont fixées sur une feuille constituée de PET, de film ou de papier.

# FIG.1

4 CONNECTION  2ND DIPOLE PORTION 2_2

5 DIPOLE DIRECT FEEDING PORTION
(CHIP MOUNTING PORTION)

$W2 \fallingdotseq \lambda/30$
(10mm)

$W1 \fallingdotseq \lambda/75$
(4mm)

$L2$

$W4$

$W3 \fallingdotseq 2mm$

1ST DIPOLE PORTION 2_1

1

FOLDED DIPOLE ANTENNA PORTION

6 INDUCTANCE PORTION

3 SLOT PORTION

$L1 \fallingdotseq \lambda/2$

EP 1 814 190 B1

FIG.2

2_2 2ND DIPOLE PORTION

CHIP 5
(DIPOLE DIRECT FEEDING PORTION)

7 SLOT-
ELECTROMAGNETICALLY
COUPLING-FEEDING
PORTION

SLOT PORTION 3

TAG 10

T1    T2
ANTENNA TERMINAL

2_1 1ST DIPOLE PORTION

FIG.3

FIG.4

FIG.5

L2 (LATERAL LENGTH OF INDUCTANCE PORTION) [mm]

## FIG.6

SLOT- ELECTROMAGNETICALLY
COUPLING-FEEDING PORTION 7

2_2 2ND DIPOLE PORTION

TAG 10

MONITOR TERMINALT3

5 CHIP

3 SLOT
PORTION

INTERNAL CAPACITANCE C1

2_1 1ST DIPOLE PORTION

T1
ANTENNA TERMINAL

T2
ANTENNA TERMINAL

FIG.7

SLOT-ELECTROMAGNETICALLY
COUPLING-FEEDING PORTION 7

2_2 2ND DIPOLE PORTION

TAG 10

LAND PATTERN 8

5 CHIP

3 SLOT
PORTION

MONITOR TERMINAL T3

INTERNAL CAPACITANCE C1

2_1 1ST DIPOLE PORTION

T1
ANTENNA TERMINAL

T2
ANTENNA TERMINAL

## FIG.8

Ra
RADIATION
RESISTANCE

La

Rc
INTERNAL
RESISTANCE

Cc

22 ANTENNA

CHIP 21

$$\left( \begin{array}{l} Ya \\ = 1\,/\,Ra + 1\,/\,j\,\omega\,La \\ = Ga - jBa \end{array} \right)$$

$$\left( \begin{array}{l} Yc \\ = 1\,/\,Rc + j\,\omega\,Cc \\ = Gc + jBc \end{array} \right)$$

# FIG.9

FOLDED DIPOLE WITH INDUCTANCE

A33 $\begin{bmatrix} Ra=500\,\Omega \\ La=40nH \end{bmatrix}$

IMPEDANCE OF FOLDED DIPOLE

A32 (Ra=500 $\Omega$)

A31 IMPEDANCE OF DIPOLE (Ra=72 $\Omega$)

A21 ADMITTANCE OF CHIP

$\begin{bmatrix} Rc=1200\,\Omega \\ Cc=0.7pF \end{bmatrix}$

L COMPONENT (+B)

(G SHORT)

C COMPONENT (-B)

(G OPEN)

700M

1200M

FIG.10A

31 DIPOLE

FIG.10B

32 FOLDED DIPOLE

FIG.10C

32 FOLDED DIPOLE

15mm

145mm ($\lambda$/2)

INDUCTANCE PORTION 33

## FIG.11

11 READER/WRITER (R / W)

13 R/W-END CIRCULARLY-POLARIZED WAVE ANTENNA

CABLE 12

14 RADIO WAVE PROPAGATION PATH

A ELECTRIC FIELD DIRECTION

TAG 15

EP 1 814 190 B1

FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2005236468 A

• WO 9840930 A

**Non-patent literature cited in the description**

• Antenna engineering handbook. Ohmsha, 05 March 1999, 112